# EUROPÄISCHE PATENTANMELDUNG

(11) **EP 2 979 544 A1**
(43) Veröffentlichungstag der Anmeldung: **03.02.2016**
(21) Anmeldenummer: 15178206.7
(22) Anmeldetag: 24.07.2015
(51) Int. Cl.: A01K 9/00

(54) **VIEHSÄUGVORRICHTUNG**

(30) Priorität: 30.07.2014 DE 202014103535 U
(71) Anmelder: Albert Kerbl GmbH, 84428 Buchbach (DE)
(72) Erfinder: KERBL, Albert, 84428 Buchbach (DE)
(74) Vertreter: Kalkoff & Partner

(57) **Zusammenfassung**

Die Erfindung betrifft eine Viehsäugvorrichtung zum Anschluss an einen Tränkebehälter, insbesondere einen Tränkeeimer, mit einem von einem zu tränkenden Tier erfassbaren Sauger (2) mit einem in der Gebrauchslage an einer Tränkebehälterinnenwand (5) anliegenden Saugerflansch (6), einem zur Aufnahme des Saugers ausgebildeten, einen Tränkebehälterinnenraum mit dem Sauger verbindenden Ventilkörper (3) mit einem in der Gebrauchslage an dem Saugerflansch anliegenden Klemmflansch (7) und einem Befestigungskörper (4), der in der Gebrauchslage in Wirkverbindung mit dem Ventilkörper befindlich den Saugerflansch flüssigkeitsdicht an der Tränkebehälterinnenwand festlegt. Um eine Viehsäugvorrichtung bereitzustellen, die sich in komfortabler Weise an einem Tränkebehälter anschließen lässt und eine zuverlässige Dichtigkeit in der Gebrauchslage aufweist, ist vorgesehen, dass der Saugerflansch einen größeren Durchmesser aufweist als der Klemmflansch.

## Beschreibung

Die Erfindung betrifft eine Viehsäugvorrichtung zum Anschluss an einen Tränkebehälter, insbesondere einen Tränkeeimer, mit
- einem von einem zu tränkenden Tier erfassbaren Sauger mit einem in der Gebrauchslage an einer Tränkebehälterinnenwand anliegenden Saugerflansch,
- einem zur Aufnahme des Saugers ausgebildeten, einen Tränkebehälterinnenraum mit dem Sauger verbindenden Ventilkörper mit einem in der Gebrauchslage an dem Saugerflansch anliegenden Klemmflansch und
- einem Befestigungskörper, der in der Gebrauchslage in Wirkverbindung mit dem Ventilkörper befindlich den Saugerflansch flüssigkeitsdicht an der Tränkebehälterinnenwand festlegt.

Mit einer Viehsäugvorrichtung ausgestattete Tränkebehälter, bevorzugt Tränkeeimer, werden dazu benutzt, um Jungtiere mit einer im Tränkebehälter angeordneten Flüssigkeit zu füttern. Die Viehsäugvorrichtung erstreckt sich dabei durch eine vorzugsweise im Bodenbereich eines Tränkeeimers angeordnete Öffnung in der Behälterwand und erlaubt dem zu säugenden Tier das Ansaugen der in dem Behälter befindlichen Flüssigkeit über den üblicherweise flexibel ausgestalteten Sauger. Aufgrund des beim Saugen entstehenden Unterdrucks wird die im Tränkebehälter angeordnete Flüssigkeit durch den Ventilkörper über den Sauger zu einer Saugeröffnung geleitet, aus der dann die Flüssigkeit austritt.

Für einen störungsfreien Betrieb ist es dabei von besonderer Bedeutung, dass die Viehsäugvorrichtung in der Gebrauchslage, d. h. in der zur Nutzung an dem Tränkebehälter montierten Position flüssigkeitsdicht mit dem Tränkebehälter verbunden ist, um ein unkontrolliertes Austreten der Flüssigkeit zu vermeiden. Zur Vermeidung von Verunreinigungen der Flüssigkeit im Behälterinnenraum hat es sich dabei bewährt auf komplexe Befestigungsmittel im Behälterinneren zu verzichten und die Viehsäugvorrichtung derart auszugestalten, dass in der Gebrauchslage ein Klemmflansch des Ventilkörpers einen Saugerflansch des Saugers im Bereich der Öffnung des Tränkebehälters an die Behälterinnenwand andrückt, wobei die hierfür erforderliche Kraft über einen Befestigungskörper erzeugt wird, welcher in der Gebrauchslage an der Behälteraußenseite anliegend mit dem aus der Öffnung herausragenden Ventilkörper in Wirkverbindung befindlich ist und diesen mit dem Klemmflansch in Richtung auf die Behälterinnenwand drückt. Im Bereich eines Saugeransatzes des Saugers ist dieser dabei zwischen dem Ventilkörper und dem Befestigungskörper eingeklemmt.

Eine aus der DE 10 2011 105 853 B3 bekannte Viehsäugvorrichtung der eingangs genannten Art weist den Nachteil auf, dass diese in der Gebrauchslage keine ausreichende Dichtigkeit gewährleistet, so dass Flüssigkeiten zwischen dem Saugerflansch und der Behälterinnenwand hindurch treten kann. Ein weiterer Nachteil der bekannten Viehsäugvorrichtung besteht darin, dass die beim Säugen auftretende zurückströmende Flüssigkeit einen hohen Flüssigkeitsdruck aufweisen kann, die im Inneren des Saugers dazu führt, dass die Flüssigkeit durch die Dichtfläche zwischen dem Klemmvorsprung und dem Saugerflansch hindurchgepresst wird, so dass die Flüssigkeit aus der Oberseite des Tränkebehälters herausspritzt. Dieser Effekt wird bei der bekannten Viehsäugvorrichtung dadurch verstärkt, dass diese im Bereich einer Ventilklappenaufhängung einen sich in Richtung des Ventilkörpers verjüngenden Hohlraum aufweist, welcher einen Düseneffekt bewirkt.

Der Erfindung liegt die Aufgabe zugrunde, eine Viehsäugvorrichtung bereitzustellen, die sich in komfortabler Weise an einem Tränkebehälter anschließen lässt und eine zuverlässige Dichtigkeit in der Gebrauchslage aufweist.

Die Erfindung löst die Aufgabe durch eine Viehsäugvorrichtung mit den Merkmalen des Anspruchs 1. Vorteilhafte Weiterbildungen der Erfindung sind in den abhängigen Ansprüchen angegeben.

Kennzeichnend für die erfindungsgemäße Viehsäugvorrichtung ist, dass der Saugerflansch einen größeren Durchmesser aufweist als der Klemmflansch. Demgemäß überragt der Saugerflansch - senkrecht zur Längsachse des Saugers betrachtet - den Klemmflansch des Ventilkörpers. Dies hat zur Folge, dass der Saugerflansch in der Gebrauchslage durch den Klemmflansch nicht allein in axialer Richtung des Saugers an die Behälterinnenwand, sondern auch in radialer Richtung - bezogen auf die Saugerlängsachse - gegen die Behälterinnenwand gedrückt wird. Hierdurch wird eine zuverlässige Abdichtung zwischen dem Saugerflansch und der Behälterinnenwand gewährleistet, so dass einem Flüssigkeitsaustritt aus dem Behälterinneren im Bereich zwischen dem Saugerflansch und der Behälterinnenwand zuverlässig vorgebeugt wird. Die erfindungsgemäße Ausgestaltung erreicht dies durch eine flächige Anlage des Saugerflanschs an der Behälterinnenwand in der Gebrauchslage, in der der Klemmflansch den Saugerflansch aufgrund des Zusammenwirkens des Ventilkörpers mit dem Befestigungskörper an die Behälterinnenwand andrückt.

Nach einer weiteren Ausgestaltung der Erfindung ist vorgesehen, dass an dem Saugerflansch eine Dichtlippe angeordnet ist, die in der Gebrauchslage an einer Umfangsfläche des Klemmflanschs anliegt. Gemäß dieser Ausgestaltung der Erfindung weist der Saugerflansch eine in Richtung auf den Behälterinnenraum vorstehende Dichtlippe auf. Diese Dichtlippe liegt in der Gebrauchslage, d. h. in der montierten Lage der Viehsäugvorrichtung an dem Tränkebehälter, in der der Saugerflansch über den Klemmflansch an die Behälterinnenwand gedrückt ist, an der Umfangsfläche des Klemmflanschs an. Die Dichtlippe kann bspw. als von dem Saugerflansch vorstehender umlaufender Ring ausgebildet sein, der aufgrund seiner Anlage an der Umfangsfläche des Klemmflanschs die Dichtigkeit zwischen dem Klemmflansch und dem Saugerflansch erhöht. Sollte trotzdem aufgrund des hohen Flüssigkeitsdrucks beim Zurückströmen zwischen dem Saugerflansch und dem Klemmflansch Flüssigkeit hindurch treten, würde diese durch die Dichtlippe umgeleitet, so dass besonders zuverlässig gewährleistet werden kann, dass keine Flüssigkeit aus der Tränkebehälteroberseite herausspritzt.

Die Ausgestaltung der Dichtlippe ist, wie bereits an vorstehender Stelle ausgeführt, grundsätzlich frei wählbar. Nach einer besonders vorteilhaften Ausgestaltung ist dabei vorgesehen, dass sich die Dichtlippe in axialer Richtung des Saugers erstreckt, wodurch mit besonders hoher Zuverlässigkeit gewährleistet wird, dass zurückströmende Flüssigkeit zuverlässig in das Behälterinnere in der Weise umgeleitet wird, so dass diese nicht in Richtung der Behälteroberseite gerichtet ist.

Der Ventilkörper weist nach einer vorteilhaften Ausgestaltung der Erfindung eine Ventilklappe auf, welche über eine Ventilklappenaufhängung an dem Ventilkörper schwenkbar befestigt ist. Zur Verbesserung der Strömungsverhältnisse bei zurückströmender Flüssigkeit und um besonders zuverlässig zu verhindern, dass zurückströmende Flüssigkeit aus der Viehsäugvorrichtung zwischen dem Saugerflansch und dem Klemmflansch in Richtung des Behälterinnenraumes austritt, ist nach einer Weiterbildung der Erfindung vorgesehen, dass der Sauger innenseitig derart ausgebildet ist, dass eine Saugerinnenwand im Bereich der Ventilklappenaufhängung der Ventilklappe des Ventilkörpers im Wesentlichen rechtwinklig an eine Ventilkörperinnenwand anschließt. Gemäß dieser Ausgestaltung des Saugers im Bereich dessen Innenseite wird ein sich in Richtung auf den Bereich zwischen dem Saugerflansch und dem Klemmflansch verjüngender Hohlraum verhindert, welcher aufgrund seiner Düsenwirkung den Austritt zurückströmender Flüssigkeit zwischen dem Klemmflansch und dem Saugerflansch begünstigen würde. Die Ausgestaltung der Saugerinnenwand kann bspw. durch einen Materialeinsatz erreicht werden, welcher einstückig mit dem Sauger ausgebildet ist und im Bereich der Ventilklappenaufhängung im Wesentlichen rechtwinklig an der bevorzugt senkrecht zur Saugerlängsachse verlaufenden Ventilkörperinnenwand anliegt. Der Einsatz fungiert dabei als Hohlraum ausfüllendes Element.

Nach einer besonders vorteilhaften Ausgestaltung der Erfindung ist vorgesehen, dass der Sauger im Bereich der Ventilklappenaufhängung einen Dichtvorsprung aufweist, der derart ausgebildet ist, dass ein in Richtung auf die Ventilkörperinnenwand gerichteter Flüssigkeitsstrom den Dichtvorsprung flüssigkeitsdicht an die Ventilkörperinnenwand andrückt. Diese Ausgestaltung der Erfindung erhöht die Dichtigkeit der Verbindung zwischen dem Sauger und dem Ventilkörper im Bereich der Ventilkörperinnenwand und gewährleistet in besonderer Weise, dass zurückströmende Flüssigkeit nicht aus der Viehsäugvorrichtung zwischen dem Klemmflansch und dem Saugerflansch heraustritt. Der Dichtvorsprung, welcher bspw. an dem vorteilhafter Weise vorgesehenen Einsatz angeordnet sein kann, wird aufgrund seiner Ausgestaltung in Folge des Flüssigkeitsdrucks der zurückströmenden Flüssigkeit an die Ventilkörperinnenwand angedrückt und erhöht somit die Dichtigkeit zwischen dem Ventilkörper und dem Sauger.

Nach einer besonders vorteilhaften Ausgestaltung der Erfindung ist dabei vorgesehen, dass der Dichtvorsprung die Ventilklappenaufhängung bereichsweise umgreift. Demnach ist der Dichtvorsprung in Längsachsenrichtung des Saugers betrachtet abschnittsweise zwischen der Ventilklappenaufhängung, die sich üblicherweise senkrecht zur Längsachse des Saugers erstreckt, und der Ventilkörperinnenwand angeordnet.

Die Befestigung der Viehsäugvorrichtung an dem Tränkebehälter erfolgt unter Verwendung des Befestigungskörpers, welcher in der Gebrauchslage außenseitig an der Behälterwand anliegt und dabei derart mit dem Ventilkörper in Wirkverbindung befindlich ist, dass der Klemmflansch des Ventilkörpers den Saugerflansch an die Behälterinnenwand andrückt. Der Sauger befindet sich dabei abschnittsweise im Bereich eines Saugeransatzes zwischen dem Ventilkörper und dem Befestigungskörper, wodurch der Sauger zuverlässig an dem Ventilkörper arretiert ist.

Nach einer vorteilhaften Ausgestaltung der Erfindung ist vorgesehen, dass der Sauger eine außenseitig angeordnete Abflachung aufweist, die zur Ausrichtung des Saugers gegenüber dem Tränkebehälter in der Gebrauchslage an einer entsprechend ausgebildeten Anschlagsfläche des Befestigungskörpers anliegt. Diese Ausgestaltung der Erfindung ermöglicht es, den Sauger gegenüber dem Tränkebehälter auszurichten, wobei die Position des Befestigungskörpers und dessen entsprechend der Abflachung ausgebildete Anschlagfläche darüber bestimmt, in welcher Lage die Viehsäugvorrichtung an dem Tränkebehälter befestigt ist. Die Verwendung einer Abflachung erlaubt damit eine besonders einfache und kostengünstige Ausrichtung im Zusammenwirken mit einer entsprechend ausgebildeten Anschlagfläche des Befestigungskörpers.

Die Festlegung des Ventilkörpers und des Saugers an dem Tränkebehälter über den Befestigungskörper kann grundsätzlich in beliebiger Weise durch eine entsprechende Gestaltung des Befestigungskörpers erfolgen. Nach einer besonders vorteilhaften Ausgestaltung der Erfindung ist jedoch vorgesehen, dass der Ventilkörper zwei gegenüberliegend angeordnete Klemmnuten aufweist, die zur Aufnahme der freien Schenkel eines U-förmigen Befestigungskörpers ausgebildet sind, wobei die Dicke der Schenkel - in Saugerlängsachsenrichtung betrachtet - in Richtung auf einen die Schenkel verbindenden Steg zunimmt.

Gemäß dieser Ausgestaltung der Erfindung wird die Viehsäugvorrichtung in der Gebrauchslage zuverlässig an dem Tränkebehälter festgeklemmt. Der von der Behälterinnenseite aus einer Öffnung in dem Behälter herausragenden Ventilkörper mit darauf angeordnetem Sauger wird mit dem Befestigungskörper in Eingriff gebracht, wobei dieser mit seinen freien Schenkeln in die Klemmnuten an gegenüberliegenden Seiten des Ventilkörpers gelangt. Aufgrund der zunehmenden Dicke der Schenkel in Richtung auf den die Schenkel verbindenden Steg, wird der Ventilkörper beim Aufschieben des Befestigungskörpers in die Klemmnuten - während der Befestigungskörper an einer Behälteraußenseite anliegt - mit dem Klemmflansch in Richtung auf die Behälterinnenwand gedrückt, so dass der dazwischen angeordnete Saugerflansch in der Gebrauchsposition, in der der Befestigungskörper vollständig auf den Ventilkörper aufgeschoben ist, zuverlässig an die Behälterinnenwand gedrückt wird. Diese Ausgestaltung der Erfindung ermöglicht eine besonders einfache, flüssigkeitsdichte und zuverlässige Anordnung der Viehsäugvorrichtung an dem Tränkebehälter, wobei auch eine einfache Demontage zur Reinigung schnell und zuverlässig vorgenommen werden kann.

Eine vorteilhafter Weise vorgesehene Abflachung ist nach einer besonders vorteilhaften Ausgestaltung der Erfindung an den Steg angepasst, so dass eine sehr einfach Ausrichtung des Saugers gegenüber dem Tränkebehälter erreicht werden kann. Über eine Ausrichtung der Viehsäugvorrichtung ist auch eine Ausrichtung einer kreuz- oder schlitzförmigen Saugeröffnung möglich, die hierzu nach einer besonders vorteilhaften Ausgestaltung gegenüber der Abflachung ausgerichtet ist. Die Ausrichtung der Saugeröffnung ist dabei bevorzugt derart, dass eine schlitzförmige Öffnung parallel oder senkrecht zur Abflachung verläuft. Bei einer kreuzförmigen Saugeröffnung verläuft ein Steg des Kreuzes senkrecht und ein anderer Steg des Kreuzes parallel zur Abflachung. Eine Ausrichtung des Saugers und damit der Saugeröffnung gewährleistet in einem besonders hohen Maß, dass beim Saugen der maximal mögliche Durchfluss gewährleistet ist.

Ein Ausführungsbeispiel der Erfindung wird nachstehend mit Bezug auf die Zeichnungen erläutert. In den Zeichnungen zeigen:
- Fig. 1: eine Explosionsdarstellung einer Viehsäugvorrichtung im Zusammenwirken mit einem als Tränkeimer ausgebildeten Tränkebehälter;
- Fig. 2: eine perspektivische Ansicht des Tränkebehälters von Fig. 1 mit daran angeordneter Viehsäugvorrichtung in der Gebrauchslage;
- Fig. 3: eine Forderansicht des Tränkeimers mit Viehsäugvorrichtung von Fig. 2;
- Fig. 4: eine Ansicht eines Schnitts der an einem Tränkeimer angeordneten Viehsäugvorrichtung;
- Fig. 5a: eine perspektivische Ansicht eines Saugers der Viehsäugvorrichtung von Fig. 1;
- Fig. 5b: Eine perspektivische Ansicht einer zweiten Ausführungsform eines Saugers;
- Fig. 6: Eine Schnittansicht des Saugers von Fig. 5a und
- Fig. 7: eine Rückansicht des Saugers von Fig. 6.

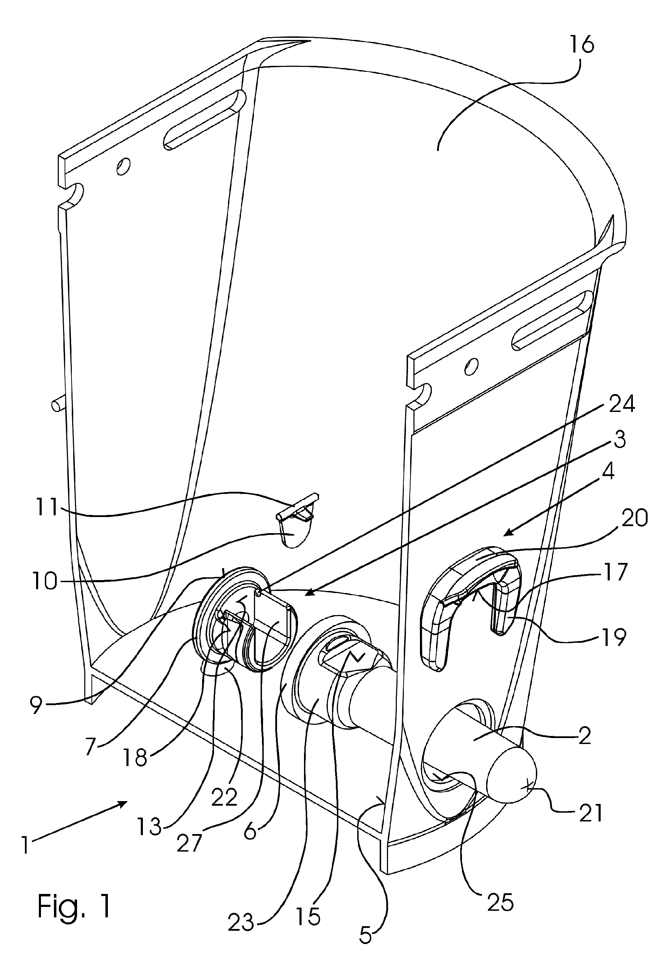

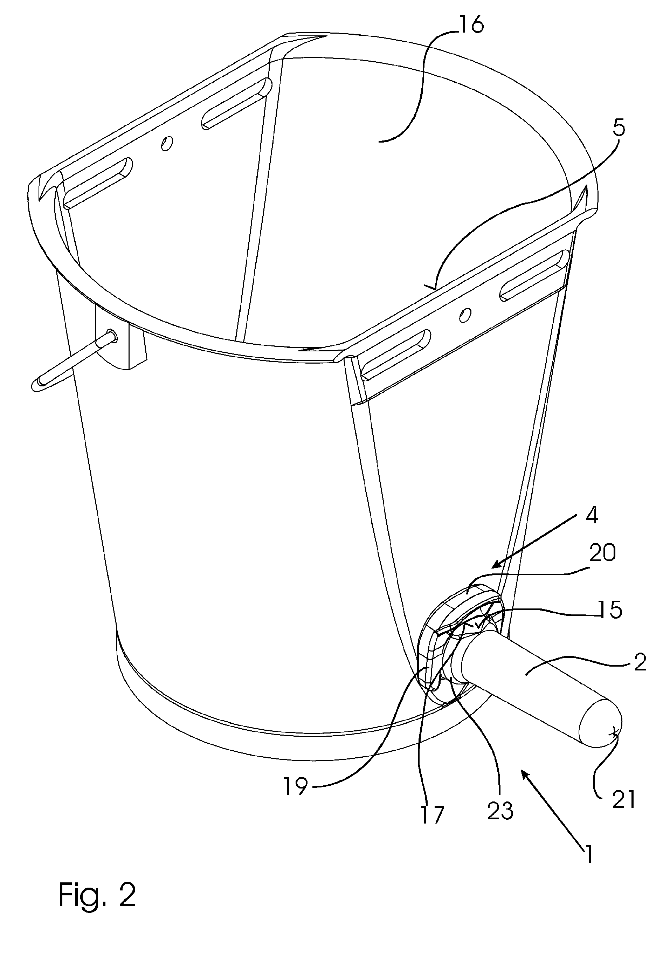

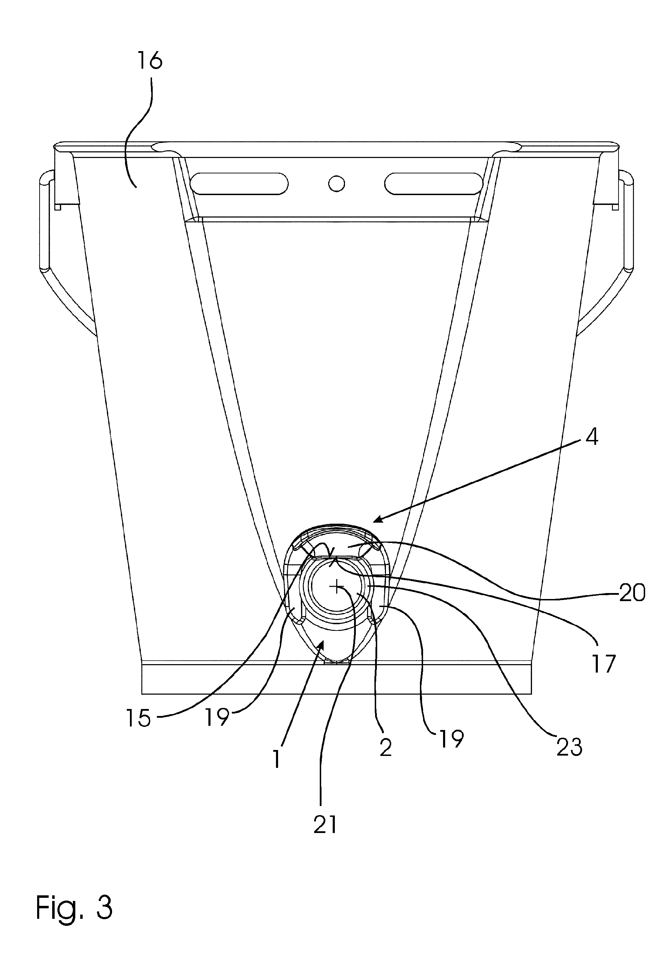

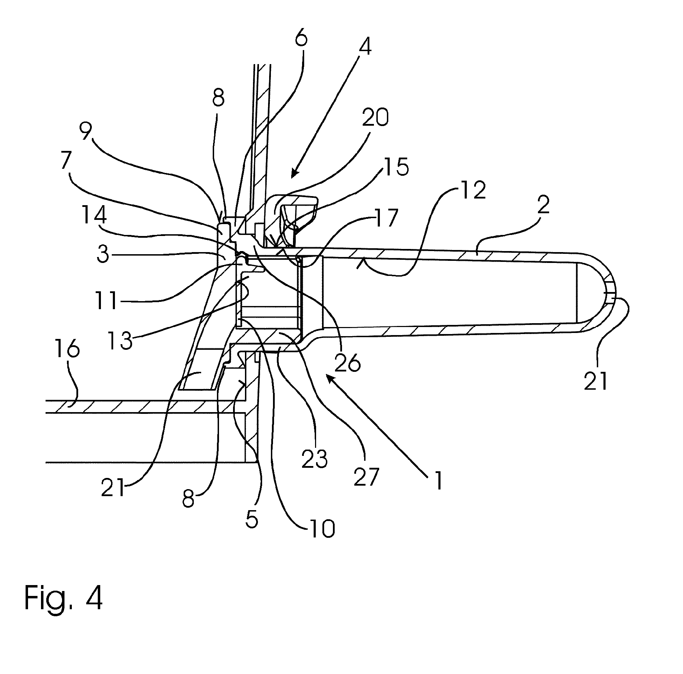

In Fig. 1 ist eine Viehsäugvorrichtung 1 in einer Explosionsdarstellung zur Anordnung an einem als Tränkeimer 16 ausgebildeten Tränkebehälter dargestellt. Die Viehsäugvorrichtung 1 weist dabei einen Sauger 2, einen Ventilkörper 3 mit einem Stutzen 27 und einer an dem Stutzen 27 angeordneten Ventilklappe 10 sowie einen Befestigungskörper 4 auf. Die Anordnung der Viehsäugvorrichtung 1 in der in Fig. 2-4 dargestellten Gebrauchslage an dem Tränkeimer 16 erfolgt derart, dass zunächst die Ventilklappe 10 mit ihrer Ventilklappenaufhängung 11 - welche sich senkrecht zur Längsachse des Saugers 2 erstreckt - in hierfür vorgesehene Aufnahmen 24 an dem Stutzen 27 des Ventilkörpers 3 eingehängt wird. Der Stutzen 27 ist dabei nach Art eines längsgeschlitzten Rohres ausgebildet, so dass dieser einen U-förmigen Querschnitt aufweist. Die freien Enden des U-förmigen Querschnitts weisen dabei im Bereich einer Ventilkörperinnenwand 13 die Aufnahmen 24 auf.

Anschließend wird der Ventilkörper 3 mit daran angeordneter Ventilklappe 10 im Bereich eines Saugeransatzes 23 in den Sauger 2 eingeführt, so dass der Saugeransatz 23 an dem sich von der Ventilkörperinnenwand 13 aus erstreckenden Stutzen 27 angeordnet ist. Der zwischen den freien Enden des Stutzens 27 ausgebildete Hohlraum ist in der montierten Lage, in der der Saugeransatz 23 auf dem Stutzen 27 angeordnet ist, im Bereich der Ventilkörperinnenwand 13 durch einen im Inneren des Saugers 2 einstückig mit diesem ausgebildeten Materialeinsatz 26 geschlossen. Der Materialeinsatz 26 erstreckt sich dabei zwischen den freien Enden und schließt im Wesentlichen rechtwinklig an die Ventilkörperinnenwand 13 an, so dass insgesamt im Bereich der Ventilkörperinnenwand 13 ein sich in Richtung auf eine Dichtfläche zwischen einem Klemmflansch 7 und einem Saugerflansch 6 verjüngender Hohlraum vermieden wird.

Der Sauger 2 mit dem daran angeordneten Ventilkörper 3 wird dann in eine Öffnung 25 des Tränkeimers 16 eingeführt, wobei der an dem Sauger 2 angeordnete Saugerflansch 6 an einer Tränkebehälterinnenwand 5 anliegt.

Zur flüssigkeitsdichten Fixierung des Saugers 2 in der Öffnung 25 wird ein Befestigungskörper 4 an einem abgeflachten Bereich der Tränkeeimeraußenseite anliegend derart auf den Saugeransatz 23 aufgeschoben, dass zwei parallel im Abstand voneinander angeordnete Schenkel 19 des Befestigungskörpers 4 mit gegenüberliegend am Ventilkörper 3 angeordneten Klemmnuten 18 in Eingriff gelangen. Durch das Aufschieben des Befestigungskörpers 4 auf den Saugeransatz 23 und der in Saugerlängsachsenrichtung ansteigenden Dicke der Schenkel 19 in Richtung auf einen die Schenkel 19 verbindenden Steg 20, wird der Ventilkörper 3 aufgrund der Anlage des Befestigungskörpers 4 an der Tränkeeimeraußenseite mit seinem Klemmflansch 7 in Richtung auf die Tränkebehälterinnenwand 5 gedrückt, wobei der Saugerflansch 6 zwischen der Tränkebehälterinnenwand 5 und dem Klemmflansch 7 eingeklemmt wird.

In der in Fig. 2-4 dargestellten Gebrauchslage ist der Befestigungskörper 4 vollständig auf den Saugeransatz 23 aufgeschoben und liegt mit einer Anschlagfläche 17 des Stegs 20 an einer Abflachung 15 des Saugeransatzes 23 an und richtet somit den Sauger 2 sowie eine kreuzförmige Saugeröffnung 21 gegenüber dem Tränkeeimer 16 aus. Der aus einem flexiblen Material gebildete Sauger 2 erlaubt es einem zu tränkenden Tier Flüssigkeit aus dem Tränkeeimer 16 über den Ventilkanal 22 des Ventilkörpers 3 herauszusaugen.

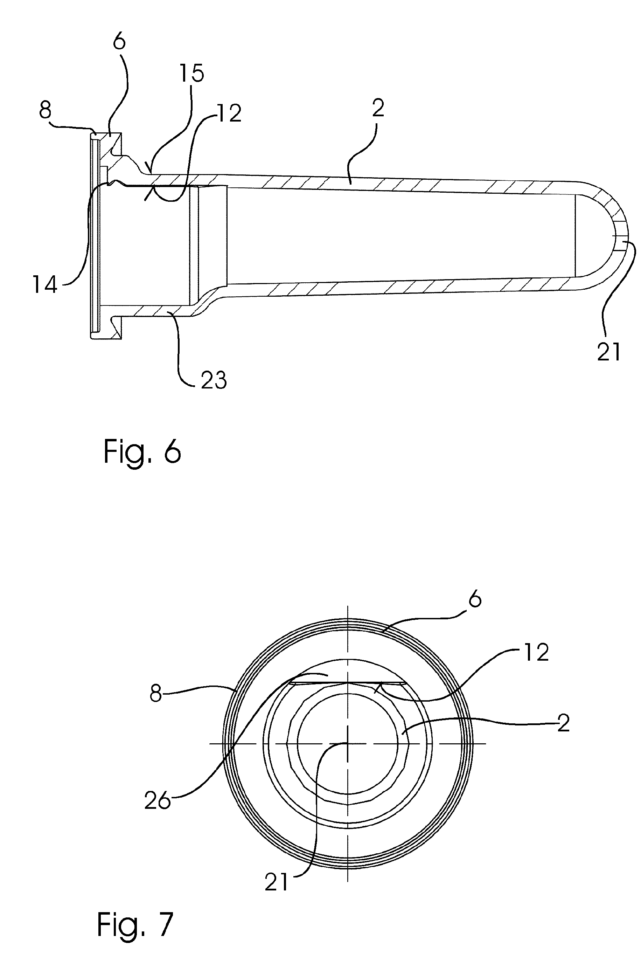

Um bei einem Zurückströmen der Flüssigkeit mit einem hohen Flüssigkeitsdruck zu verhindern, dass zwischen dem Klemmflansch 7 und dem Saugerflansch 6 Flüssigkeit in den Tränkeeimer 16 zurückfließt, weist der Sauger 2 im Bereich der Ventilklappenaufhängung 11 den einstückig mit dem Sauger 2 ausgebildeten Materialeinsatz 26 auf, welcher die Ventilklappenaufhängung 11 teilweise umgreift und mit einem Dichtvorsprung 14 an einer Ventilkörperinnenwand 13 anliegt. Der Einsatz 26 verhindert die Bildung eines sich in Richtung auf die Dichtfläche zwischen Klemmflansch 7 und Saugerflansch 6 verjüngenden Hohlraums und gewährleistet über den Dichtvorsprung 14 zudem, dass zurückfließende Flüssigkeit den Dichtvorsprung 14 an die Ventilkörperinnenwand 13 andrückt. Die Funktionsfähigkeit der Ventilklappe 10 wird dabei nicht beeinträchtigt (vgl. Fig. 6 und 7).

Zur Erhöhung der Dichtigkeit weist der Saugerflansch 6 darüber hinaus einen größeren Durchmesser als der Klemmflansch 7 auf, so dass der Saugerflansch 6 in der Gebrauchslage auch in radialer Richtung durch den Klemmflansch 7 an die Behälterinnenwand 5 gedrückt wird. Eine Dichtlippe 8, welche an dem Saugerflansch 6 angeordnet ist, liegt überdies an einer Umfangsfläche 9 des Klemmflanschs 7 an und verbessert die Dichtigkeit zwischen dem Saugerflansch 6 und dem Klemmflansch 7 in ergänzender Weise.

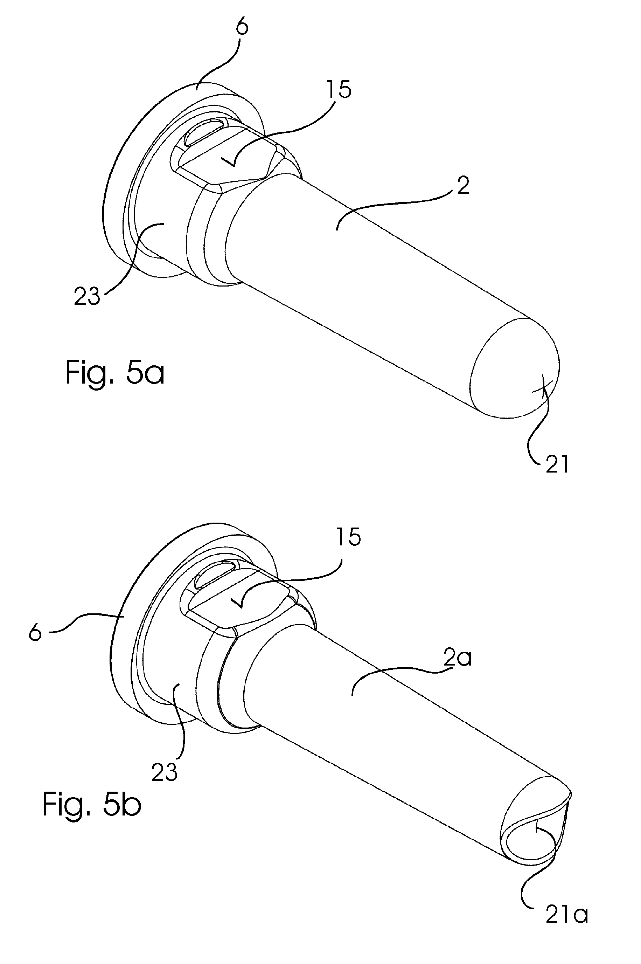

Der Austritt der angesaugten Flüssigkeit aus dem Sauger 2 erfolgt über die Saugeröffnung 21, 21a, die wie bei dem in Fig. 5a dargestellten Sauger 2 kreuzförmig oder aber, wie bei dem in Fig. 5b dargestellten Sauger 2a, durch einen Schlitz gebildet ist. Die Ausrichtung der Saugeröffnung 21, 21a erfolgt durch ein Zusammenwirken der Anschlagfläche 17 des Befestigungskörpers 4 in der Gebrauchslage mit der Abflachung 15 des Saugers 2, 2a.

### Bezugszeichenliste

- 1: Viehsäugvorrichtung
- 2, 2a: Sauger
- 3: Ventilkörper
- 4: Befestigungskörper
- 5: Tränkebehälterinnenwand
- 6: Saugerflansch
- 7: Klemmflansch
- 8: Dichtlippe
- 9: Umfangsfläche
- 10: Ventilklappe
- 11: Ventilklappenaufhängung
- 12: Saugerinnenwand
- 13: Ventilkörperinnenwand
- 14: Dichtvorsprung
- 15: Abflachung
- 16: Tränkebehälter
- 17: Anschlagfläche
- 18: Klemmnuten
- 19: Schenkel
- 20: Steg
- 21, 21a: Saugeröffnung
- 22: Ventilkanal
- 23: Saugeransatz
- 24: Aufnahme (Ventilklappenaufhängung)
- 25: Öffnung (Tränkebehälter)
- 26: Einsatz
- 27: Stutzen

## Patentansprüche

1. Viehsäugvorrichtung zum Anschluss an einen Tränkebehälter, insbesondere einen Tränkeeimer, mit
- einem von einem zu tränkenden Tier erfassbaren Sauger (2) mit einem in der Gebrauchslage an einer Tränkebehälterinnenwand (5) anliegenden Saugerflansch (6),
- einem zur Aufnahme des Saugers (2) ausgebildeten, einen Tränkebehälterinnenraum mit dem Sauger (2) verbindenden Ventilkörper (3) mit einem in der Gebrauchslage an dem Saugerflansch (6) anliegenden Klemmflansch (7) und
- einem Befestigungskörper (4), der in der Gebrauchslage in Wirkverbindung mit dem Ventilkörper (3) befindlich den Saugerflansch (6) flüssigkeitsdicht an der Tränkebehälterinnenwand (5) festlegt,
**dadurch gekennzeichnet, dass**
der Saugerflansch (6) einen größeren Durchmesser aufweist als der Klemmflansch (7).

2. Viehsäugvorrichtung nach Anspruch 1, **dadurch gekennzeichnet, dass** an dem Saugerflansch (6) eine Dichtlippe (8) angeordnet ist, die in der Gebrauchslage an einer Umfangsfläche (9) des Klemmflanschs (7) anliegt.

3. Viehsäugvorrichtung nach Anspruch 1 oder 2, **dadurch gekennzeichnet, dass** sich die Dichtlippe (8) in axialer Richtung des Saugers (2) erstreckt.

4. Viehsäugvorrichtung nach einem der vorhergehenden Ansprüche, **dadurch gekennzeichnet, dass** der Sauger (2) innenseitig derart ausgebildet ist, dass eine Saugerinnenwand (12) im Bereich einer Ventilklappenaufhängung (11) einer Ventilklappe (10) des Ventilkörpers (3) im Wesentlichen rechtwinklig an eine Ventilkörperinnenwand (13) anschließt.

5. Viehsäugvorrichtung nach einem der vorhergehenden Ansprüche, **dadurch gekennzeichnet, dass** der Sauger (2) im Bereich der Ventilklappenaufhängung (11) einen Dichtvorsprung (14) aufweist, der derart ausgebildet ist, dass ein in Richtung auf die Ventilkörperinnenwand (13) gerichteter Flüssigkeitsstrom den Dichtvorsprung (14) flüssigkeitsdicht an die Ventilkörperinnenwand (13) andrückt.

6. Viehsäugvorrichtung nach einem der vorhergehenden Ansprüche, **dadurch gekennzeichnet, dass** der Dichtvorsprung (14) die Ventilklappenaufhängung (11) bereichsweise umgreift.

7. Viehsäugvorrichtung nach einem der vorhergehenden Ansprüche, **dadurch gekennzeichnet, dass** der Sauger (2) eine außenseitig angeordnete Abflachung (15) aufweist, die zur Ausrichtung des Saugers (2) gegenüber dem Tränkebehälter (16) in der Gebrauchslage an einer entsprechend ausgebildeten Anschlagfläche (17) des Befestigungskörpers (4) anliegt.

8. Viehsäugvorrichtung nach einem der vorhergehenden Ansprüche, **dadurch gekennzeichnet, dass** der Ventilkörper (3) zwei gegenüberliegend angeordnete Klemmnuten (18) aufweist, die zur Aufnahme der freien Schenkel (19) des U-förmigen Befestigungskörpers (4) ausgebildet sind, wobei die Dicke der Schenkel (19) - in Saugerlängsachsenrichtung betrachtet - in Richtung auf einen die Schenkel (19) verbindenden Steg (20) zunimmt.

9. Viehsäugvorrichtung nach einem der vorhergehenden Ansprüche, **dadurch gekennzeichnet, dass** die Abflachung (15) an den Steg (20) angepasst ist.

10. Viehsäugvorrichtung nach einem der vorhergehenden Ansprüche, **dadurch gekennzeichnet, dass** eine Schlitz- oder kreuzförmige Saugeröffnung (21) gegenüber der Abflachung (15) ausgerichtet ist.
